# EUROPÄISCHE PATENTSCHRIFT

(11) **EP 3 988 780 B1**
(45) Veröffentlichungstag und Bekanntmachung des Hinweises auf die Patenterteilung: **25.02.2026**
(21) Anmeldenummer: 21202611.6
(22) Anmeldetag: 14.10.2021
(51) Int. Cl.: F02M 43/04, F02M 45/08, F02M 47/02, F02D 19/08, F02D 19/06

(54) **KRAFTSTOFFINJEKTOR EINER DUAL-FUEL BRENNKRAFTMASCHINE, DUAL-FUEL BRENNKRAFTMASCHINE UND VERFAHREN ZU BETREIBEN DERSELBEN**
FUEL INJECTOR OF A DUAL FUEL COMBUSTION ENGINE, DUAL FUEL COMBUSTION ENGINE AND METHOD OF OPERATING THE SAME
INJECTEUR DE CARBURANT D'UNE MACHINE À COMBUSTION INTERNE À BI-CARBURANT, MACHINE À COMBUSTION INTERNE À BI-CARBURANT ET SON PROCÉDÉ DE FONCTIONNEMENT

(30) Priorität: 22.10.2020 DE 102020127782
(43) Veröffentlichungstag der Anmeldung: 27.04.2022
(73) Patentinhaber: Everllence SE, 86153 Augsburg (DE)
(72) Erfinder: Wloka, Johann, 81735 München (DE); Klaua, Thomas, 86157 Augsburg (DE); Poensgen, Christian, 86415 Mering (DE)

(56) Entgegenhaltungen:
- DE-B3- 102015 203 614
- GB-A- 2 560 513
- US-A1- 2013 081 593

## Beschreibung

Die Erfindung betrifft einen Kraftstoffinjektor einer Dual-Fuel Brennkraftmaschine. Des Weiteren betrifft die Erfindung eine Dual-Fuel Brennkraftmaschine und ein Verfahren zum Betreiben derselben.

Die Erfindung betrifft insbesondere den Bereich sogenannter Großmotoren bzw. Großbrennkraftmaschinen, deren Zylinder Kolbendurchmesser von mindestens 140 mm, insbesondere von mindestens 175 mm, aufweisen. Bei solchen Großbrennkraftmaschinen handelt es sich zum Beispiel um Schiffsmotoren.

Als Schiffsmotoren sind bereits Dual-Fuel Brennkraftmaschinen bekannt. Aus der Praxis bekannte Dual-Fuel Brennkraftmaschinen können in einem ersten Betriebsmodus betrieben werden, in welchem dieselben einen flüssigen Kraftstoff verbrennen, sowie in einem zweiten Betriebsmodus, in welchem dieselben einen gasförmigen Kraftstoff oder einen anderen flüssigen Kraftstoff verbrennen.

Aus der DE 10 2017 123 315 A1 ist eine Dual-Fuel Brennkraftmaschine mit einem Dual-Fuel Kraftstoffinjektor bekannt. Jeder Kraftstoff wird über eine separate Kraftstoffpumpe in Richtung auf den Dual-Fuel Kraftstoffinjektor gefördert. Ferner ist ein separates Dichtungs- und Schmierölsystem vorhanden.

US 2013 / 0 081 593 A1 offenbart einen Kraftstoffinjektor einer Dual-Fuel Brennkraftmaschine nach dem Oberbegriff des Anspruchs 1.

GB 2 560 513 A und DE 10 2015 203 614 B3 offenbaren weiteren Stand der Technik. Hiervon ausgehend liegt der vorliegenden Erfindung die Aufgabe zugrunde, einen neuartigen Kraftstoffinjektor einer Dual-Fuel Brennkraftmaschine und eine Dual-Fuel Brennkraftmaschine mit einem solchen Kraftstoffinjektor zu schaffen.

Diese Aufgabe wird durch einen Kraftstoffinjektor nach Anspruch 1 gelöst.

Der Kraftstoffinjektor ist dazu ausgebildet, einer Brennkammer eines Zylinders der Dual-Fuel Brennkraftmaschine flüssigen Kraftstoff zuzuführen. Der Kraftstoffinjektor verfügt über einen Grundkörper, über eine in einer Nadelführung des Grundkörpers bewegbar geführte Düsennadel, und über einen vom Grundkörper definierten Nadelkraftstoffraum, der über Öffnungen mit der Brennkammer koppelbar ist, wobei die Öffnungen in einer ersten Stellung der Düsennadel geöffnet und in einer zweiten Stellung der Düsennadel geschlossen sind. In den Grundkörper des Kraftstoffinjektors ist eine erste Leitung eingebracht, die mit dem Nadelkraftstoffraum gekoppelt ist, wobei über die erste Leitung ein erster flüssiger Kraftstoff in den Nadelkraftstoffraum einbringbar ist. In den Grundkörper des Kraftstoffinjektors ist ferner eine von der ersten Leitung getrennte zweite Leitung eingebracht, die auch mit dem Nadelkraftstoffraum gekoppelt ist, wobei über die zweite Leitung ein zweiter flüssiger Kraftstoff in den Nadelkraftstoffraum einbringbar ist. Der Nadelkraftstoffraum weit eine erste Teilkammer und eine zweite Teilkammer auf, wobei die zweite Teilkammer benachbart zu den Öffnungen, über welche der Nadelkraftstoffraum mit der Brennkammer des Zylinders koppelbar ist, ausbildet und über die Öffnungen mit dem Nadelkraftstoffraum gekoppelt ist. Die zweite Leitung für den zweiten flüssigen Kraftstoff ist mit der zweiten Teilkammer des Nadelkraftstoffraums über eine Drossel gekoppelt und mündet in die zweite Teilkammer, wobei die erste Leitung für den ersten flüssigen Kraftstoff in die erste Teilkammer des Nadelkraftstoffraums mündet, die von den Öffnungen beabstandet ist. Die erste Teilkammer und die zweite Teilkammer des Nadelkraftstoffraums sind über eine drosselartige Engstelle miteinander gekoppelt.

Der erfindungsgemäße Kraftstoffinjektor erlaubt eine besonders vorteilhafte Kraftstoffinjektion in den Brennraum eines jeweiligen Zylinders einer Dual-Fuel Brennkraftmaschine, welche flüssige Kraftstoffe verbrennt. In einem definierten Betriebsmodus der Dual-Fuel Brennkraftmaschine kann über den Kraftstoffinjektor ein flüssiger, relativ zündunwilliger Kraftstoff in die Brennkammer des jeweiligen Zylinders eingespritzt werden, und zwar zusammen mit einem anderen flüssigen, relativ zündwilligen Kraftstoff, welcher der Zündung des relativ zündunwilligen flüssigen Kraftstoffs dient. In einem anderen definierten Betriebsmodus dient der Kraftstoffinjektor ausschließlich der Einbringung des relativ zündwilligen flüssigen Kraftstoffs in die jeweilige Brennkammer des jeweiligen Zylinders. Der erfindungsgemäße Kraftstoffinjektor dient demnach als Hauptinjektor und auch als Pilotinjektor. Es kann auf einen separaten Pilotinjektor verzichtet werden. Dies erlaubt einen einfachen Aufbau einer Brennkraftmaschine.

Die zweite Leitung ist mit dem Nadelkraftstoffraum über die Drossel gekoppelt, um dann, wenn der flüssige, relativ zündunwillige Kraftstoff über die erste Leitung in den Nadelkraftstoffraum eingebracht wird, über die zweite Leitung den relativ zündwilligen flüssigen Kraftstoff dem Nadelkraftstoffraum definiert zuzuführen.

Nach einer Weiterbildung der Erfindung ist die zweite Leitung ferner mit der Nadelführung und/oder mit einem Steuerraum eines Steuerventils des Kraftstoffinjektors gekoppelt ist, wobei über die zweite Leitung der flüssige, relativ zündwillige Kraftstoff der Nadelführung als Sperrfluid und/oder dem Steuerraum als Arbeitsfluid zuführbar ist. Der relativ zündwillige flüssige Kraftstoff dient dann auch als Sperrfluid und/oder Arbeitsfluid. Dies erlaubt einen besonders einfachen Aufbau der Brennkraftmaschine. Vorzugsweise ist die zweite Leitung mit dem Steuerraum des Steuerventils über eine weitere Drossel gekoppelt. Dies ist bevorzugt, um den relativ zündwilligen Kraftstoff dem Steuerraum des Steuerventils definiert zuzuführen.

Die erfindungsgemäße Dual-Fuel Brennkraftmaschine ist in Anspruch 7 definiert. Das Verfahren zum Betreiben der Dual-Fuel Brennkraftmaschine ist in Anspruch 8 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: ein Schema eines Schiffsantriebssystems mit einer Dual-Fuel Brennkraftmaschine;
- Fig. 2: einen Querschnitt durch einen Kraftstoffinjektor der Dual-Fuel Brennkraftmaschine;
- Fig. 3: ein erstes Zeitdiagramm zur Verdeutlichung des Verfahrens zum Betreiben der Dual-Fuel Brennkraftmaschine;
- Fig. 4: ein zweites Zeitdiagramm zur Verdeutlichung des Verfahrens zum Betreiben der Dual-Fuel Brennkraftmaschine.

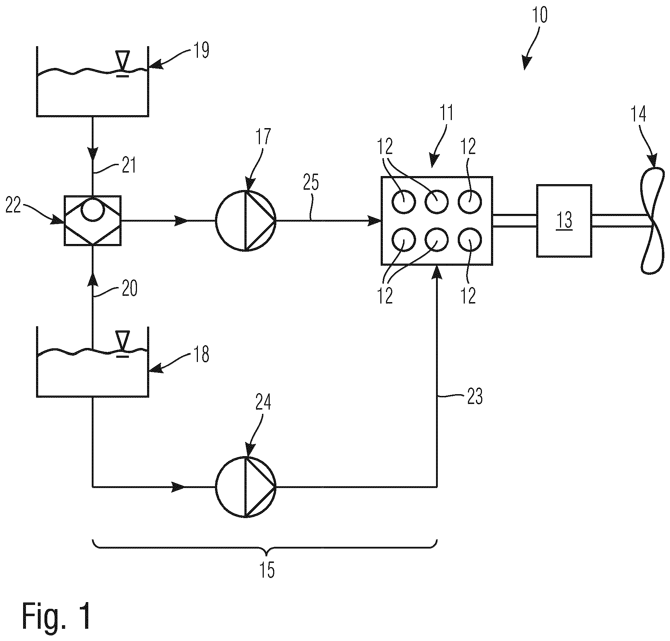

Fig. 1 zeigt stark schematisiert ein Schiffsantriebssystem 10, welches eine Dual-Fuel Brennkraftmaschine 11 mit mehreren Zylindern 12 aufweist.

In den Zylindern 12 wird Kraftstoff verbrannt, und zwar in einem ersten Betriebsmodus der Dual-Fuel Brennkraftmaschine 11 ein flüssiger, relativ zündwilliger Kraftstoff und in einem zweiten Betriebsmodus der Dual-Fuel Brennkraftmaschine 11 ein flüssiger, relativ zündunwilliger Kraftstoff.

Bei der Verbrennung des jeweiligen Kraftstoffs erzeugt die Dual-Fuel Brennkraftmaschine 11 Antriebsleistung, die in Fig. 1 dazu genutzt wird, einen Generator 13 anzutreiben. Im Generator 13 wird elektrische Energie erzeugt, die dem Antrieb eines Schiffspropellers 14 dient.

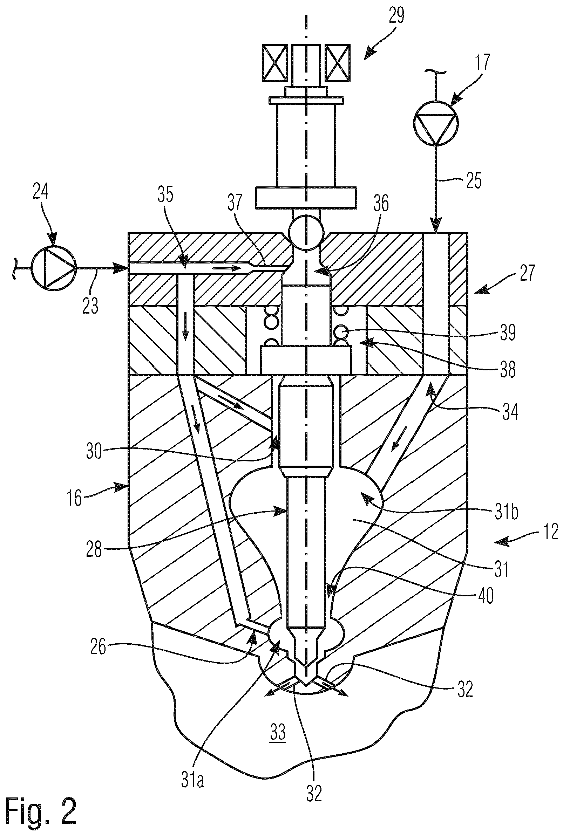

Fig. 1 zeigt weiterhin ein Kraftstoffversorgungssystem 15 der Dual-Fuel Brennkraftmaschine 11. Fig. 2 zeigt als Baugruppe des Kraftstoffversorgungssystems 15 einen erfindungsgemäßen Kraftstoffinjektor 16.

Über das Kraftstoffversorgungssystem 15 kann im jeweiligen Betriebsmodus der Dual-Fuel Brennkraftmaschine 11 den Zylindern 12 derselben der jeweilige flüssige Kraftstoff zugeführt werden.

Das Kraftstoffversorgungssystem 15 weist je Zylinder 12 mindestens einen Kraftstoffinjektor 16 auf, insbesondere einen einzigen Kraftstoffinjektor 16.

Über diesen Kraftstoffinjektor 16 kann in dem ersten Betriebsmodus der Dual-Fuel Brennkraftmaschine 11 dem jeweiligen Zylinder 12 der relativ zündwillige, flüssige Kraftstoff zugeführt werden. Ferner kann über diesen Kraftstoffinjektor 16 in einem zweiten Betriebsmodul der Dual-Fuel Brennkraftmaschine 11 dem jeweiligen Zylinder 12 der relativ zündunwillige, flüssige Kraftstoff und zur Zündung dieses relativ zündunwilligen, flüssigen Kraftstoffs der relativ zündwillige, flüssige Kraftstoff zugeführt werden.

Ein und derselbe Kraftstoffinjektor 16 eines jeweiligen Zylinders 12 dient demnach sowohl im ersten Betriebsmodus als auch im zweiten Betriebsmodus dem Einbringen des jeweiligen flüssigen Kraftstoffs in den jeweiligen Zylinder 12, nämlich im ersten Betriebsmodus dem Einbringen ausschließlich des zündwilligen Kraftstoffs und im zweiten Betriebsmodus dem Einbringen des zündunwilligen, flüssigen Kraftstoffs und des zündwilligen, flüssigen Kraftstoffs zur Zündung des zündunwilligen, flüssigen Kraftstoffs. Ein und derselbe Kraftstoffinjektor 16 dient demnach als Haupt- und Pilotinjektor.

Fig. 2 zeigt den erfindungsgemäßen Kraftstoffinjektor 16 in größerem Detail. Wie bereits ausgeführt, dient dieser Kraftstoffinjektor 16 im ersten Betriebsmodus dem Einbringen des relativ zündwilligen, flüssigen Kraftstoffs in den jeweiligen Zylinder und im zweiten Betriebsmodus dem Einbringen des relativ zündunwilligen, flüssigen Kraftstoffs zusammen mit dem relativ zündwilligen, flüssigen Kraftstoff in den jeweiligen Zylinder, wobei im zweiten Betriebsmodus der relativ zündwillige, flüssige Kraftstoff der Zündung des relativ zündunwilligen, flüssigen Kraftstoffs dient.

Der Kraftstoffinjektor 16 verfügt über einen vorzugsweise mehrteiligen Grundkörper 27, eine Düsennadel 28 sowie ein Steuerventil 29.

Die Düsennadel 28 ist in einer Nadelführung 30 des Grundkörpers 27 bewegbar geführt. Der Grundkörper 27 definiert einen Nadelkraftstoffraum 31. Dieser Nadelkraftstoffraum 31 ist über Öffnungen 32 mit einer Brennkammer 33 des jeweiligen Zylinders 12 koppelbar. In einer ersten Stellung der Düsennadel 28 verschließt dieselbe die Öffnungen 32. In einer zweiten Stellung der Düsennadel 28 gibt dieselbe die Öffnungen 32 frei.

In den Grundkörper 27 des erfindungsgemäßen Kraftstoffinjektors 16 ist eine erste Leitung 34 eingebracht. Diese erste Leitung 34 ist mit dem Nadelkraftstoffraum 31 gekoppelt, wobei über die erste Leitung 34 ein erster flüssiger Kraftstoff in den Nadelkraftstoffraum 31 einbringbar ist.

In den Grundkörper 27 ist zusätzlich zu dieser ersten Leitung 34, die mit dem Nadelkraftstoffraum 31 gekoppelt ist, eine von der ersten Leitung 34 getrennte zweite Leitung 35 eingebracht, die unabhängig von der ersten Leitung 34 mit dem Nadelkraftstoffraum 31 gekoppelt ist. Über diese zweite Leitung 35 kann ein zweiter Kraftstoff in den Nadelkraftstoffraum 31 eingebracht werden.

Während die erste Leitung 34 in eine Teilkammer 31b des Nadelkraftstoffraums 31 mündet, die von den Öffnungen 32 beabstandet ist, mündet die zweite Leitung 35 in eine Teilkammer 31b des Nadelkraftstoffraums 31, die benachbart zu den Öffnungen 32, über welche der Nadelkraftstoffraum 31 mit der Brennkammer 33 des jeweiligen Zylinders 12 koppelbar ist, ausgebildet ist. Während also die zweite Leitung 35 benachbart zu den Öffnungen 32 in den Nadelkraftstoffraum 31 mündet, mündet die erste Leitung 34 deutlich beabstandet zu den Öffnungen 32 in den Nadelkraftstoffraum 31. Die beiden Teilkammern 31a, 31b des Nadelkraftstoffraums 31 sind über eine drosselartige Engstelle 40 miteinander gekoppelt.

In dem ersten Betriebsmodus der Dual-Fuel Brennkraftmaschine 11 ist der ersten Leitung 34 als erster Kraftstoff und der zweiten Leitung 35 als zweiter Kraftstoff jeweils ein relativ zündwilliger, flüssiger Kraftstoff zuführbar. Im ersten Betriebsmodus wird demnach beiden Teilkammern 31a, 31b des Nadelkraftstoffraums 31 der zündwillige, flüssige Kraftstoff zugeführt.

In dem zweiten Betriebsmodus der Dual-Fuel Brennkraftmaschine 11 ist der ersten Leitung 34 als erster Kraftstoff der relativ zündunwillige Kraftstoff und der zweiten Leitung 35 als zweiter flüssiger Kraftstoff der relativ zündwillige flüssige Kraftstoff zuführbar, der dann im zweiten Betriebsmodus der Zündung des relativ zündunwilligen Kraftstoffs dient. Im zweiten Betriebsmodus wird demnach der Teilkammern 31a des Nadelkraftstoffraums 31 der relativ zündwillige, flüssige Kraftstoff und der Teilkammern 31b des Nadelkraftstoffraums 31 der relativ zündunwillige, flüssige Kraftstoff zugeführt.

Fig. 1 zeigt einen Kraftstofftank 18, in welchem der relativ zündwillige, flüssige Kraftstoff bereitgehalten wird.

Im ersten Betriebsmodus wird dieser relativ zündwillige, flüssige Kraftstoff der ersten Leitung 34 des jeweiligen Kraftstoffinjektors 16 über eine erste Kraftstoffpumpe 17 zugeführt, die auch als Hauptpumpe bezeichnet werden kann. Im ersten Betriebsmodus wird der relativ zündwillige, flüssige Kraftstoff ferner ausgehend vom Kraftstofftank 18 der zweiten Leitung 35 des jeweiligen Kraftstoffinjektors 16 über eine zweite Kraftstoffpumpe 24 zugeführt, die auch als Pilotpumpe bezeichnet wird.

Der Druck, den die zweite Kraftstoffpumpe 24 bereitstellt, ist dabei vorzugsweise geringfügig höher als der Druck, den die erste Kraftstoffpumpe 17 bereitstellt.

Im zweiten Betriebsmodus der Dual-Fuel Brennkraftmaschine wird der relativ zündunwillige, flüssige Kraftstoff, der in einem zweiten Kraftstofftank 19 bereitgehalten wird, der ersten Leitung 34 des jeweiligen Kraftstoffinjektors 16 wiederum über die erste Kraftstoffpumpe 17 zugeführt, wohingegen im zweiten Betriebsmodus der zweiten Leitung 35 des jeweiligen Kraftstoffinjektors der relativ zündwillige Kraftstoff ausgehend vom Kraftstofftank 18 über die zweite Kraftstoffpumpe 24 zugeführt wird.

Fig. 1 zeigt neben den beiden Kraftstofftanks 18, 19 ein Wechselventil 22. Der Kraftstofftank 18, welcher den relativ zündwilligen, flüssigen Kraftstoff bereithält, ist über eine Kraftstoffleitung 20 mit dem Wechselventil 22 gekoppelt, wohingegen der zweite Kraftstofftank 19, welcher den relativ zündunwilligen, flüssigen Kraftstoff bereithält, über eine Kraftstoffleitung 21 mit dem Wechselventil 22 gekoppelt ist.

Dann, wenn die Dual-Fuel Brennkraftmaschine 11 im ersten Betriebsmodus zu betreiben ist, ist der Kraftstofftank 18 über das Wechselventil 22 mit der Kraftstoffpumpe 17 gekoppelt. Der Kraftstofftank 19 ist im ersten Betriebsmodus von der Kraftstoffpumpe 17 abgekoppelt. Wird hingegen die Dual-Fuel Brennkraftmaschine im zweiten Betriebsmodus betrieben, ist der Kraftstofftank 19, welcher den relativ zündunwilligen, flüssigen Kraftstoff bereithält, über das Wechselventil 22 mit der ersten Kraftstoffpumpe 17 gekoppelt. Der Kraftstofftank 18, welcher den relativ zündwilligen, flüssigen Kraftstoff bereithält, ist im zweiten Betriebsmodus über das Wechselventil 22 von der ersten Kraftstoffpumpe 17 abgekoppelt.

Wie Fig. 1 entnommen werden kann, erstreckt sich, ausgehend von der zweiten Kraftstoffpumpe 24 in Richtung auf die Zylinder 12 eine Kraftstoffleitung 23, die mit der zweiten Leitung 35 des jeweiligen Kraftstoffinjektors 16 gekoppelt ist. Ausgehend von der Kraftstoffpumpe 17 erstreckt sich eine Kraftstoffleitung 25 in Richtung auf die Zylinder 12, die mit der jeweiligen ersten Leitung 34 des jeweiligen Kraftstoffinjektors 16 gekoppelt ist.

Dann, wenn demnach die Dual-Fuel Brennkraftmaschine 11 im ersten Betriebsmodus betrieben wird, sind die beiden Leitungen 34, 35 des jeweiligen Kraftstoffinjektors 16 mit dem Kraftstofftank 18 gekoppelt, sodass dann beiden Leitungen 34, 35 des jeweiligen Kraftstoffinjektors 16 der relativ zündwillige, flüssige Kraftstoff zugeführt wird. Dann, wenn die Dual-Fuel Brennkraftmaschine 11 im zweiten Betriebsmodus betrieben wird, ist die erste Leitung 34 mit dem Kraftstofftank 19 und die zweite Leitung 35 des jeweiligen Kraftstoffinjektors 16 mit dem Kraftstofftank 18 gekoppelt, sodass dann im zweiten Betriebsmodus dem Nadelkraftstoffraum 31 des jeweiligen Kraftstoffinjektors 16 der relativ zündunwillige, flüssige Kraftstoff über die erste Leitung 34 und der relativ zündwillige, flüssige Kraftstoff über die zweite Leitung 35 zugeführt wird.

Der Druck in der zweiten Leitung 35 ist geringfügig höher als der Druck in der ersten Leitung 34, sodass im zweiten Betriebsmodus ausgehend von der zweiten Leitung 35 der relativ zündwillige Kraftstoff in die Teilkammer 31a des Nadelkraftstoffraums 31 definiert eingebracht werden kann, wobei der Nadelkraftstoffraum 31, nämlich die Teilkammer 31a desselben, über eine Drossel 26 mit der zweiten Leitung 35 gekoppelt ist. Über die Dimensionierung der Drossel 26 kann die Menge des im zweiten Betriebsmodus in die Teilkammer 31 eingebrachten, relativ zündwilligen Kraftstoffs definiert eingestellt werden kann. Dies erfolgt insbesondere derart, dass in die Teilkammer 31a im zweiten Betriebsmodus ausgehend von der zweiten Leitung 35 der relativ zündwillige, flüssige Kraftstoff und die Teilkammer 31b ausgehend von der ersten Leitung 34 der relativ zündunwillige, flüssige Kraftstoff in den Nadelkraftstoffraum 31 eingebracht wird. Beim Einspritzvorgang gelangt dann im zweiten Betriebsmodus zunächst der relativ zündwillige Kraftstoff in die Brennkammer 33 und nachfolgend der relativ zündunwillige, flüssige Kraftstoff in die Brennkammer 33, wodurch dann im zweiten Betriebsmodus der relativ zündunwillige, flüssige Kraftstoff definiert über den relativ zündwilligen, flüssigen Kraftstoff gezündet werden kann.

Im bevorzugten Ausführungsbeispiel des erfindungsgemäßen Kraftstoffinjektors 16, die in Fig. 2 gezeigt ist, ist die zweite Leitung 35 des Kraftstoffinjektors 16, welche über die Drossel 26 mit der Teilkammer 31a des Nadelkraftstoffraums 31 gekoppelt ist, auch mit der Nadelführung 30 sowie mit einem Steuerraum 36 des Steuerventils 29 des Kraftstoffinjektors 16 gekoppelt. Demnach ist über die zweite Leitung 35 in beiden Betriebsmodi der Dual-Fuel Brennkraftmaschine 11 der relativ zündwillige Kraftstoff nicht nur dem Nadelkraftstoffraum 31 zuführbar, sondern sowohl der Nadelführung 30 als auch dem Steuerraum 36 des Steuerventils 29. Der relativ zündwillige Kraftstoff dient im Bereich der Nadelführung 30 als Sperrfluid und im Bereich des Steuerraums 36 des Steuerventils 29 als Arbeitsfluid. Gemäß Fig. 2 ist die zweite Leitung 35 des jeweiligen Kraftstoffinjektors 16 mit dem Steuerraum 36 des Steuerventils 29 über eine weitere Drossel 37 gekoppelt.

Wie bereits ausgeführt, ist der Druck in der zweiten Leitung 35 größer als der Druck in der ersten Leitung 34. So kann im Bereich der Nadelführung 30 eine besonders vorteilhafte Sperrwirkung über das Sperrfluid gewährleistet werden.

In der besonders bevorzugten Ausführung des Kraftstoffinjektors 16 dient demnach die zweite Leitung 35 nicht nur der Zuführung des zündwilligen Kraftstoffs in Richtung auf den Nadelkraftstoffraum 31, sondern vielmehr ferner der Zuführung dieses zündwilligen Kraftstoffs in Richtung auf die Nadelführung 30 sowie den Steuerraum 36 des Steuerventils 29, sodass dieser zündwillige Kraftstoff dann auch als Sperrfluid und Arbeitsfluid dient. Dies gewährleistet einen besonders einfachen Aufbau eines Brennkraftmaschine.

Wie Fig. 2 entnommen werden kann, ist die Nadelführung 30 zwischen dem Nadelkraftstoffraum 31 und dem Steuerraum 36 des Steuerventils 29 positioniert, nämlich zwischen der Teilkammer 31b des Nadelkraftstoffraums 31 und dem Steuerraum 36 des Steuerventils 29.

Fig. 2 zeigt weiterhin, dass zwischen der Nadelführung 30 und dem Steuerraum 36 ein Federraum 38 positioniert ist, in welchem eine Feder 39 aufgenommen ist. Die Feder 39 drückt die Düsennadel 28 in ihre Schließstellung.

Beim relativ zündwilligen, flüssigen Kraftstoff handelt es sich vorzugsweise um einen flüssigen Kraftstoff, der eine Schmierfähigkeit WSD zwischen 100 µm und 300 µm, vorzugsweise zwischen 100 µm und 200 µm, aufweist. Beim relativ zündwilligen Kraftstoff handelt es sich dabei vorzugsweise um einen Dieselkraftstoff. Beim relativ zündunwilligen, flüssigen Kraftstoff handelt es sich vorzugsweise um einen flüssigen Kraftstoff, der eine Schmierfähigkeit WSD zwischen 300 µm und 820 µm, vorzugsweise zwischen 400 µm und 820 µm, aufweist: Beim relativ zündunwilligen Kraftstoff handelt es sich vorzugsweise um Ethanol oder Methanol.

Neben dem erfindungsgemäßen Kraftstoffinjektor 16 betrifft die Erfindung auch eine Dual-Fuel Brennkraftmaschine 11, wobei jeder Zylinder 12 der Dual-Fuel Brennkraftmaschine 11 mindestens einen, vorzugsweise einen einzigen, erfindungsgemäßen Kraftstoffinjektor 16 aufweist. Über den Kraftstoffinjektor 16 kann den Zylindern 12 im ersten Betriebsmodus der relativ zündwillige Kraftstoff zugeführt werden, im zweiten Betriebsmodus der relativ zündwillige Kraftstoff und der relativ zündunwillige Kraftstoff, wobei der relativ zündwillige Kraftstoff der Zündung des relativ zündunwilligen Kraftstoffs dient.

Ferner betrifft die Erfindung ein Verfahren zum Betreiben einer Dual-Fuel Brennkraftmaschine 11. Im ersten Betriebsmodus wird den Zylindern 12 ausschließlich der relativ zündwillige Kraftstoff über den jeweiligen Kraftstoffinjektor 16 zugeführt, nämlich in die Brennkammer 33 des jeweiligen Zylinders 12 eingebracht. Im zweiten Betriebsmodus hingegen wird der relativ zündwillige Kraftstoff und der relativ zündunwillige Kraftstoff gemeinsam über den jeweiligen Kraftstoffinjektor 16 in die Brennkammer 33 des jeweiligen Zylinders 12 eingebracht, wobei im zweiten Betriebsmodus der relativ zündwillige Kraftstoff der Zündung des relativ zündunwilligen Kraftstoffs dient.

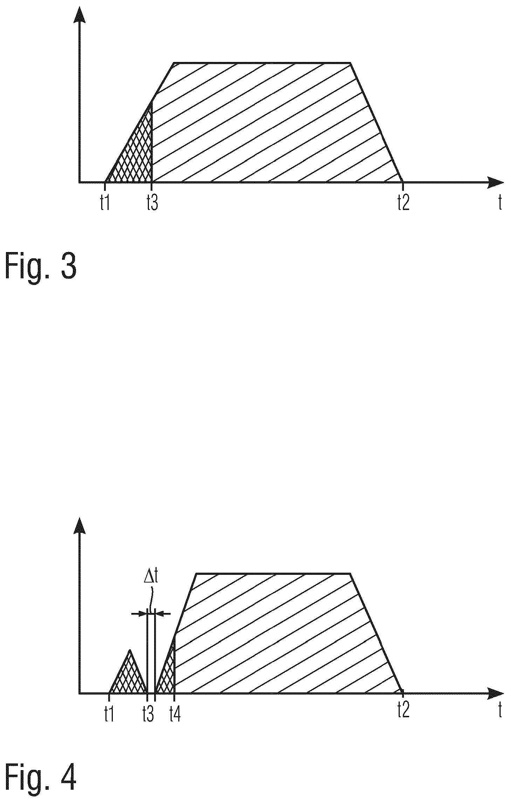

Eine Möglichkeit, wie im zweiten Betriebsmodus der relativ zündwillige Kraftstoff und der relativ zündunwillige Kraftstoff in eine Brennkammer 33 des jeweiligen Zylinders 12 eingebracht werden können, zeigt Fig. 3. So zeigt Fig. 3 über der Zeit t die Einspritzung im zweiten Betriebsmodus in einen Zylinder 12, wobei die Einspritzung zum Zeitpunkt t1 beginnt und zum Zeitpunkt t2 endet. Bedingt dadurch, dass sich im zweiten Betriebsmodus in der Teilkammer 31a der relativ zündwillige Kraftstoff sammelt und in der Teilkammer 31b der relativ zündunwillige Kraftstoff, wird zunächst zwischen den Zeitpunkten t1 und t3 ausgehend von der ersten Teilkammer 31a der relativ zündwillige Kraftstoff in die Brennkammer 33 des jeweiligen Zylinders 12 eingebracht, nachfolgend zwischen den Zeitpunkten t3 und t2 ausgehend von der Teilkammer 31b der relativ zündunwillige Kraftstoff. Der relativ zündunwillige Kraftstoff wird über den relativ zündwilligen Kraftstoff gezündet.

Fig. 4 zeigt eine alternative Vorgehensweise zum Einspritzen des Kraftstoffs unter Verwendung des erfindungsgemäßen Kraftstoffinjektors 16, wobei in Fig. 4 zwischen den Zeitpunkten t1 und t3 zunächst ausschließlich relativ zündwilliger Kraftstoff ausgehend von der Teilkammer 31a in die Brennkammer 33 des jeweiligen Zylinders 12 eingespritzt und gezündet wird, um die Brennkammer 33 zu konditionieren. Mit einem zeitlichen Versatz Δt anschließend an den Zeitpunkt t3 beginnt zum Zeitpunkt t4 eine eigentliche Haupteinspritzung, wobei zunächst wiederum ausgehend von der Teilkammer 31a relativ zündwilliger Kraftstoff und anschließend hieran relativ zündunwilliger Kraftstoff in die Brennkammer 33 des jeweiligen Zylinders 12 eingebracht wird. In Fig. 4 ist demnach die Einspritzung in die Voreinspritzung zwischen den Zeitpunkten t1 und t3 und in die sich anschließende Haupteinspritzung zwischen den Zeitpunkten t4 und t2 untergliedert.

Mit der Erfindung kann auf einen separaten Pilotinjektor verzichtet werden. Über ein und denselben Kraftstoffinjektor 16 können in beiden Betriebsmodi einer Dual-Fuel Brennkraftmaschine 11 die flüssigen Kraftstoffe in die Brennkammer 33 des jeweiligen Zylinders 12 eingebracht werden.

Der relativ zündwillige Kraftstoff, der im zweiten Betriebsmodus der Zündung des relativ zündunwilligen Kraftstoffs dient, wird in der Teilkammer 31a des Nadelkraftstoffraums 31 gespeichert, der benachbart an die Öffnungen 32 bzw. einen Nadelsitz der Düsennadel 38 ausgebildet ist. So gelangt im zweiten Betriebsmodus in jedem Einspritztakt zunächst der relativ zündwillige Kraftstoff in die Brennkammer 33 des jeweiligen Zylinders 12, sodass dann der relativ zündunwillige Kraftstoff über den relativ zündwilligen Kraftstoff gut gezündet und entflammt werden kann. Vorzugsweise dient der relativ zündwillige Kraftstoff ferner als Sperrfluid und Arbeitsfluid, nämlich als Sperrfluid im Bereich der Nadelführung 30 und als Arbeitsfluid im Bereich des Steuerventils 29.

Die betrifft insbesondere den Bereich sogenannter Großmotoren bzw. Großbrennkraftmaschinen, deren Zylinder Kolbendurchmesser von mindestens 140 mm, insbesondere von mindestens 175 mm, aufweisen. Bei solchen Großbrennkraftmaschinen handelt es sich zum Beispiel um Schiffsmotoren. Diese sind bei der Erfindung als Dual-Fuel Brennkraftmaschinen ausgeführt.

### Bezugszeichenliste

- 10: Schiffsantriebssystems
- 11: Dual-Fuel Brennkraftmaschine
- 12: Zylinder
- 13: Generator
- 14: Schiffspropeller
- 15: Kraftstoffversorgungssystem
- 16: Kraftstoffinjektor
- 17: Kraftstoffpumpe
- 18: Kraftstofftank
- 19: Kraftstofftank
- 20: Kraftstoffleitung
- 21: Kraftstoffleitung
- 22: Wechselventil
- 23: Kraftstoffleitung
- 24: Kraftstoffpumpe
- 25: Kraftstoffleitung
- 26: Drossel
- 27: Grundkörper
- 28: Düsennadel
- 29: Steuerventil
- 30: Nadelführung
- 31: Nadelkraftstoffraum
- 31a: Teilkammer
- 31b: Teilkammer
- 32: Öffnung
- 33: Brennkammer
- 34: Leitung
- 35: Leitung
- 36: Steuerraum
- 37: Drossel
- 38.: Federraum
- 39: Feder
- 40: Engstelle

## Patentansprüche

1. Kraftstoffinjektor (16) einer Dual-Fuel Brennkraftmaschine (11), der dazu ausgebildet ist, einer Brennkammer (33) eines Zylinders (12) der Dual-Fuel Brennkraftmaschine (11) Kraftstoff zuzuführen,
mit einem Grundkörper (27),
mit einer in einer Nadelführung (30) des Grundkörpers (27) bewegbar geführten Düsennadel (28),
mit einem vom Grundkörper (27) definierten Nadelkraftstoffraum (31), der über Öffnungen (32) mit der Brennkammer (33) des Zylinders (12) koppelbar ist, wobei die Öffnungen (32) in einer ersten Stellung der Düsennadel (28) geöffnet und in einer zweiten Stellung der Düsennadel (28) geschlossen sind,
wobei in den Grundkörper (27) eine erste Leitung (34) eingebracht ist, die mit dem Nadelkraftstoffraum (31) gekoppelt ist, wobei über die erste Leitung (34) ein erster flüssiger Kraftstoff in den Nadelkraftstoffraum (31) einbringbar ist,
wobei in den Grundkörper (27) eine von der ersten Leitung (34) getrennte zweite Leitung (35) eingebracht ist, die mit dem Nadelkraftstoffraum (31) gekoppelt ist,
wobei der Nadelkraftstoffraum (31) eine erste Teilkammer (31b) und eine zweite Teilkammer (31a) aufweist,
wobei die zweite Teilkammer (31a) benachbart zu den Öffnungen (32), über welche der Nadelkraftstoffraum (31) mit der Brennkammer (33) des Zylinders (12) koppelbar ist, ausbildet und über die Öffnungen (32) mit dem Nadelkraftstoffraum (31) gekoppelt ist,
**dadurch gekennzeichnet, dass**
über die zweite Leitung (35) ein zweiter flüssiger Kraftstoff in den Nadelkraftstoffraum (31) einbringbar ist,
die zweite Leitung (35) für den zweiten flüssigen Kraftstoff mit der zweiten Teilkammer (31a) des Nadelkraftstoffraums (31) über eine Drossel (26) gekoppelt ist und in die zweite Teilkammer (31a) mündet,
die erste Leitung (34) für den ersten flüssigen Kraftstoff in die erste Teilkammer (31b) des Nadelkraftstoffraums (31) mündet, die von den Öffnungen (32) beabstandet ist,
die erste Teilkammer (31b) und die zweite Teilkammer (31a) des Nadelkraftstoffraums (31) über eine drosselartige Engstelle (40) miteinander gekoppelt sind.

2. Kraftstoffinjektor (16) nach Anspruch 1, wobei die zweite Leitung (35) auch mit der Nadelführung (30) des Kraftstoffinjektors (16) gekoppelt ist, wobei über die zweite Leitung (35) der zweite Kraftstoff der Nadelführung (30) als Sperrfluid zuführbar ist.

3. Kraftstoffinjektor (16) nach Anspruch 1 oder 2, wobei die zweite Leitung (35) auch mit einem Steuerraum (36) eines Steuerventils (29) des Kraftstoffinjektors (16) gekoppelt ist, wobei über die zweite Leitung (35) der zweite Kraftstoff dem Steuerraum (36) als Arbeitsfluid zuführbar ist.

4. Kraftstoffinjektor (16) nach Anspruch 3, wobei die zweite Leitung (35) mit dem Steuerraum (36) des Steuerventils (29) über eine Drossel (37) gekoppelt ist.

5. Kraftstoffinjektor (16) nach Anspruche 3 oder 4, wobei die Nadelführung (30) zwischen dem Nadelkraftstoffraum (31) und dem Steuerraum (36) des Steuerventils (29) positioniert ist.

6. Kraftstoffinjektor (16) nach einem der Ansprüche 1 bis 5,
wobei derselbe ein Dual-Fuel Injektor ist,
wobei in einem ersten Betriebsmodus der Dual-Fuel Brennkraftmaschine der ersten Leitung (34) als erster Kraftstoff und der zweiten Leitung (35) als zweiter Kraftstoff jeweils ein relativ zündwilliger Kraftstoff zuführbar ist,
wobei in einem zweiten Betriebsmodus der Dual-Fuel Brennkraftmaschine der ersten Leitung (34) als erster Kraftstoff ein relativ zündunwilliger Kraftstoff und der zweiten Leitung (35) als zweiter Kraftstoff der relativ zündwillige Kraftstoff zur Zündung des relativ zündunwilligen Kraftstoffs zuführbar ist.

7. Dual-Fuel Brennkraftmaschine (11),
mit Zylindern (12), in welchen in einem ersten Betriebsmodus der Dual-Fuel Brennkraftmaschine ein relativ zündwilliger, flüssiger Kraftstoff und in einem zweiten Betriebsmodus ein relativ zündunwilliger, flüssiger Kraftstoff verbrennbar ist,
mit einem je Zylinder (12) mindestens einen Kraftstoffinjektor (16) aufweisenden Einspritzsystem, über welches den Zylindern (12) in dem ersten Betriebsmodus als erster und zweiter flüssiger Kraftstoff jeweils der relativ zündwillige Kraftstoff zuführbar ist, und über welches den Zylindern (12) in dem zweiten Betriebsmodus als erster flüssiger Kraftstoff der relativ zündunwillige Kraftstoff und als zweiter flüssiger Kraftstoff der relativ zündwillige Kraftstoff zur Zündung des relativ zündunwilligen Kraftstoffs zuführbar ist, wobei der jeweilige Kraftstoffinjektor (16) nach einem der Ansprüche 1 bis 6 ausgebildet ist.

8. Verfahren zum Betreiben einer Dual-Fuel Brennkraftmaschine (11) nach Anspruch 7,
wobei in dem ersten Betriebsmodus der relativ zündwillige Kraftstoff über den jeweiligen Kraftstoffinjektor (16) in die Brennkammer (33) des jeweiligen Zylinders eingebracht wird,
wobei in dem zweiten Betriebsmodus der relativ zündwillige Kraftstoff und der relativ zündunwillige Kraftstoff über den jeweiligen Kraftstoffinjektor (16) in die Brennkammer (33) des jeweiligen Zylinders eingebracht werden, wobei im zweiten Betriebsmodus der relativ zündwillige Kraftstoff der Zündung des relativ zündunwilligen Kraftstoffs dient.

## Claims

1. A fuel injector (16) of a dual-fuel internal combustion engine (11), which is designed for supplying fuel to a combustion chamber (33) of a cylinder (12) of the dual-fuel internal combustion engine (11),
having a main body (27),
having a nozzle needle (28) moveably guided in a needle guide (30) of the main body (27),
having a needle fuel space (31) defined by the main body (27), which can be coupled via orifices (32) to the combustion chamber (33) of the cylinder (12), wherein the orifices (32) are open in a first position of the nozzle needle (28) and closed in a second position of the nozzle needle (28),
wherein into the main body (27) a first line (34) is introduced, which is coupled to the needle fuel space (31), wherein via the first line (34) a first liquid fuel can be introduced into the needle fuel space (31),
wherein into the main body (27) a second line (35) separate from the first line (34) is introduced, which is coupled to the needle fuel space (31),
wherein the needle fuel space (31) comprises a first sub-chamber (31b) and a second sub-chamber (31a),
wherein the second sub-chamber (31a) is formed adjacently to the orifices (32), via which the needle fuel space (31) can be coupled to the combustion chamber (33) of the cylinder (12) and is coupled to the needle fuel space (31) via the orifices (32),
**characterised in that**
via the second line (35) a second liquid fuel can be introduced into the needle fuel space (31),
the second line (35) for the second liquid fuel is coupled via a choke (26) to the second sub-chamber (31a) of the needle fuel space (31) and leads into the second sub-chamber (31a),
the first line (34) for the first liquid fuel leads into the first sub-chamber (31b) of the needle fuel space (31), which is spaced apart from the orifices (32),
the first sub-chamber (31b) and the second sub-chamber (31a) of the needle fuel space (31) are coupled to one another via a choke-like constriction (40).

2. The fuel injector (16) according to Claim 1,
wherein the second line (35) is also coupled to the needle guide (30) of the fuel injector (16),
wherein via the second line (35) the second fuel can be supplied as barrier fluid to the needle guide (30).

3. The fuel injector (16) according to Claim 1 or 2,
wherein the second line (35) is also coupled to a control space (36) of a control valve (29) of the fuel injector (16),
wherein via the second line (35) the second fuel can be supplied as working fluid to the control space (36).

4. The fuel injector (16) according to Claim 3, wherein the second line (35) is coupled via a choke (37) to the control space (36) of the control valve (29).

5. The fuel injector (16) according to Claims 3 or 4,
wherein the needle guide (30) is positioned between the needle fuel space (31) and the control space (36) of the control valve (29).

6. The fuel injector (16) according to any one of the Claims 1 to 5,
wherein the same is a dual-fuel injector,
wherein in a first operating mode of the dual-fuel internal combustion engine the first line (34) and the second line (35) can each be supplied with a relatively ignitable fuel as first fuel and as second fuel, respectively,
wherein in a second operating mode a relatively less ignitable fuel can be supplied as first fuel to the first line (34) and the relatively ignitable fuel as second fuel to the second line (35) for igniting the relatively less ignitable fuel.

7. A dual-fuel internal combustion engine (11),
having cylinders (12), in which in a first operating mode of the dual-fuel internal combustion engine a relatively ignitable, liquid fuel and in a second operating mode a relatively less ignitable, liquid fuel can be combusted,
having an injection system comprising at least one fuel injector (16) for each cylinder (12), via which in the first operating mode the cylinders (12) can each be supplied as first and second liquid fuel with the relatively less ignitable fuel, and via which in the second operating mode the cylinders (12) can be supplied as first liquid fuel with the relatively less ignitable fuel and as second liquid fuel with the relatively ignitable fuel for igniting the relatively less ignitable fuel, wherein the respective fuel injector (16) is designed according to any one of the Claims 1 to 6.

8. A method for operating a dual-fuel internal combustion engine (11) according to Claim 7,
wherein in the first operating mode the relatively ignitable fuel is introduced into the combustion chamber (33) of the respective cylinder via the respective fuel injector (16),
wherein in the second operating mode the relatively ignitable fuel and the relatively less ignitable fuel are introduced into the combustion chamber (33) of the respective cylinder via the respective fuel injector (16),
wherein in the second operating mode the relatively ignitable fuel serves for igniting the relatively less ignitable fuel.

## Revendications

1. Injecteur de carburant (16) d'un moteur à combustion interne bicarburant (11), qui est configuré pour alimenter en carburant une chambre de combustion (33) d'un cylindre (12) du moteur à combustion interne bicarburant (11),
comportant un corps de base (27),
comportant une aiguille (28) guidée de manière mobile dans un guide d'aiguille (30) du corps de base (27),
comportant une chambre d'injection de carburant à aiguille (31) délimitée par le corps de base (27), qui communique avec la chambre de combustion (33) du cylindre (12) par des ouvertures (32), dans lequel les ouvertures (32) sont ouvertes dans une première position de l'aiguille (28) et fermées dans une deuxième position de l'aiguille (28),
dans lequel une première conduite (34) est ménagée dans le corps de base (27), qui est raccordée à la chambre d'injection de carburant à aiguille (31), permettant l'introduction d'un premier carburant liquide dans la chambre d'injection de carburant à aiguille (31) via la première conduite (34),
dans lequel une deuxième conduite (35), séparée de la première conduite (34), est ménagée dans le corps de base (27), qui est relié à la chambre d'injection de carburant à aiguille (31),
dans lequel la chambre d'injection de carburant à aiguille (31) comporte une première chambre partielle (31b) et une deuxième chambre partielle (31a),
dans lequel la deuxième chambre partielle (31a) est adjacente aux ouvertures (32), via lesquelles la chambre d'injection de carburant à aiguille (31) peut être raccordée à la chambre de combustion (33) du cylindre (12) et est raccordée à la chambre d'injection de carburant à aiguille (31) via les ouvertures (32),
**caractérisé en ce que**
un deuxième carburant liquide peut être introduit dans la chambre d'injection de carburant à aiguille (31) par la deuxième conduite (35),
la deuxième conduite (35) pour le deuxième carburant liquide est raccordée à la deuxième chambre partielle (31a) de la chambre d'injection de carburant à aiguille (31) par un papillon des gaz (26) et débouche dans la deuxième chambre partielle (31a),
la première conduite (34) pour le premier carburant liquide débouche dans la première chambre partielle (31b) de la chambre d'injection de carburant à aiguille (31), qui est espacée des ouvertures (32),
la première chambre partielle (31b) et la deuxième chambre partielle (31a) de la chambre d'injection de carburant à aiguille (31) sont raccordées l'une à l'autre par un rétrécissement (40) semblable à un papillon des gaz.

2. Injecteur de carburant (16) selon la revendication 1,
dans lequel la deuxième conduite (35) est également raccordée au guide d'aiguille (30) de l'injecteur de carburant (16),
dans lequel le deuxième carburant peut être acheminé vers le guide d'aiguille (30) en tant que fluide barrière via la deuxième conduite (35).

3. Injecteur de carburant (16) selon la revendication 1 ou 2,
dans lequel la deuxième conduite (35) est également raccordée à une chambre de commande (36) d'une vanne de commande (29) de l'injecteur de carburant (16),
dans lequel le deuxième carburant peut être acheminé vers la chambre de commande (36) en tant que fluide de travail via la deuxième conduite (35).

4. Injecteur de carburant (16) selon la revendication 3, dans lequel la deuxième conduite (35) est raccordée à la chambre de commande (36) de la vanne de commande (29) via un papillon des gaz (37).

5. Injecteur de carburant (16) selon la revendication 3 ou 4,
dans lequel le guide d'aiguille (30) est positionné entre la chambre de carburant d'aiguille (31) et la chambre de commande (36) de la vanne de commande (29).

6. Injecteur de carburant (16) selon une des revendications 1 à 5,
dans lequel il s'agit d'un injecteur bicarburant,
dans lequel, dans un premier mode de fonctionnement du moteur à combustion bicarburant, un carburant relativement inflammable peut respectivement alimenter la première conduite (34) en tant que premier carburant et la deuxième conduite (35) en tant que deuxième carburant,
dans lequel, dans un deuxième mode de fonctionnement du moteur à combustion bicarburant, un carburant relativement ininflammable peut alimenter la première conduite (34) en tant que premier carburant et le carburant relativement inflammable peut alimenter la deuxième conduite (35) en tant que deuxième carburant afin d'enflammer le carburant relativement ininflammable.

7. Moteur à combustion interne bicarburant (11),
comportant des cylindres (12) dans lesquels, dans un premier mode de fonctionnement, un carburant liquide relativement inflammable peut être brûlé et, dans un deuxième mode de fonctionnement, un carburant liquide relativement ininflammable peut être brûlé,
comportant un système d'injection présentant au moins un injecteur de carburant (16) par cylindre (12),via lequel les cylindres (12) dans le premier mode de fonctionnement sont alimentés respectivement en carburant relativement inflammable en tant que premier et deuxième carburant liquide et via lequel les cylindres (12) dans le deuxième mode de fonctionnement sont alimentés en carburant relativement ininflammable en tant que premier carburant liquide et en carburant relativement inflammable en tant que deuxième carburant liquide afin d'enflammer le carburant relativement ininflammable, dans lequel l'injecteur de carburant respectif (16) est configuré selon une des revendications 1 à 6.

8. Procédé de fonctionnement d'un moteur à combustion interne bicarburant (11) selon la revendication 7, dans lequel, dans le premier mode de fonctionnement, le carburant relativement inflammable est introduit dans la chambre de combustion (33) du cylindre respectif via l'injecteur de carburant respectif (16),
dans lequel, dans le deuxième mode de fonctionnement, le carburant relativement inflammable et le carburant relativement ininflammable sont introduits dans la chambre de combustion (33) du cylindre respectif via l'injecteur de carburant respectif (16),
dans lequel, dans le deuxième mode de fonctionnement, le carburant relativement inflammable sert à enflammer le carburant relativement ininflammable.
